# EUROPÄISCHE PATENTSCHRIFT

(11) **EP 4 177 682 B1**
(45) Veröffentlichungstag und Bekanntmachung des Hinweises auf die Patenterteilung: **31.12.2025**
(21) Anmeldenummer: 21206547.8
(22) Anmeldetag: 04.11.2021
(51) Int. Cl.: G05B 19/042

(54) **SANITÄRSYSTEM**
SANITARY SYSTEM
SYSTÈME SANITAIRE

(43) Veröffentlichungstag der Anmeldung: 10.05.2023
(73) Patentinhaber: Geberit International AG, 8645 Jona (CH)
(72) Erfinder: RAISSLE, Daniel, 8852 Altendorf (CH); OBERHOLZER, Roland, 8610 Uster (CH); PORTMANN, Florian, 8708 Männedorf (CH); HARTMANN, Andy, 8712 Stäfa (CH); SALZMANN, Stefan, 8640 Rapperswil (CH)
(74) Vertreter: Frischknecht, Harry Ralph

(56) Entgegenhaltungen:
- EP-A1- 3 723 060
- EP-A1- 3 748 093
- EP-B1- 3 073 709
- WO-A2-2009/061857
- US-A1- 2019 349 890

## Beschreibung

### TECHNISCHES GEBIET

Die vorliegende Erfindung betrifft ein Sanitärsystem nach Anspruch 1 und ein Verfahren nach Anspruch 13 sowie ein Computerprogrammprodukt nach Anspruch 14.

### STAND DER TECHNIK

Aus dem Stand der Technik sind vernetzte Sanitärsysteme bekannt. Beispielsweise offenbart die DE 93 13 983 U1 eine Ansteuerung von diversen Sanitärelementen mit einer zentralen Steuerung. Die WO 2009/061857 zeigt die Anbindung einer Sanitärinfrastruktur an das Internet.

### DARSTELLUNG DER ERFINDUNG

Eine Aufgabe der vorliegenden Erfindung ist es, ein vernetztes Sanitärsystem anzugeben, welches durch einen Sanitärfachmann flexibel angesteuert werden kann. Insbesondere für Wartungs- oder Überwachungsarbeiten. Diese Aufgabe löst das Sanitärsystem nach Anspruch 1.

Demgemäss umfasst ein Sanitärsystem mindestens einen Sanitärartikel, mindestens ein Gateway und einen mobilen Computer.

Der mindestens eine Sanitärartikel weist eine Sanitärartikelsteuerung auf, die zur Interaktion mit dem Sanitärartikel konfiguriert ist. Die Sanitärartikelsteuerung weist mindestens einen Prozessor, eine mit dem Prozessor wirkverbundene erste sanitärartikelseitige Kommunikationsschnittstelle und eine mit dem Prozessor wirkverbundene zweite sanitärartikelseitige Kommunikationsschnittstelle auf.

Das mindestens eine Gateway weist eine erste gatewayseitige Kommunikationsschnittstelle und eine zweite gatewayseitige Kommunikationsschnittstelle auf. Der mobile Computer weist mindestens einen Prozessor, mindestens eine mit dem Prozessor wirkverbundene computerseitige Kommunikationsschnittstelle und einen mit dem Prozessor wirkverbundenen Bildschirm auf.

Das mindestens eine Gateway steht über die erste gatewayseitige Kommunikationsschnittstelle mit der ersten sanitärartikelseitigen Kommunikationsschnittstelle über eine Datenverbindung in Verbindung.

Der mobile Computer steht mit der mindestens einen computerseitigen Kommunikationsschnittstelle entweder
- mit der zweiten sanitärartikelseitigen Kommunikationsschnittstelle über eine Datenverbindung in Verbindung, so dass eine direkte Datenverbindung zwischen dem mobilen Computer und der mindestens einen Sanitärartikelsteuerung bereitstellbar ist, oder
- mit einer weiteren gatewayseitigen Kommunikationsschnittstelle über eine Datenverbindung in Verbindung, so dass eine indirekte Datenverbindung zwischen dem mobilen Computer und der mindestens einen Sanitärartikelsteuerung bereitstellbar ist.

Die direkte Datenverbindung bzw. die indirekte Datenverbindung zwischen dem mobilen Computer und der Sanitärartikelsteuerung sind derart konfiguriert, dass Daten zwischen dem Prozessor des mobilen Computers und dem Prozessor der mindestens einen Sanitärartikelsteuerung austauschbar sind.

Diese Sanitärsystem hat den Vorteil, dass der Sanitärartikel über zwei Wege mit dem mobilen Computer verbindbar ist, nämlich einerseits indirekt über das Gateway und andererseits direkt. Hierdurch ergeht der Vorteil, dass ein Installateur mit einem mobilen Computer jeden einzelnen Sanitärartikel unabhängig vom übergeordneten Gateway ansprechen kann. Dies ist bei Installationsarbeiten, wenn das System noch nicht vollständig aufgebaut ist von Vorteil, denn es können dann entsprechende Konfigurationen eingestellt werden. Aber auch im laufenden Betrieb ist dies ein Vorteil. Beispielsweise bei einem Ausfall des Gateways oder wenn am Ort des Sanitärartikels keine Verbindung zum Gateway hergestellt werden kann.

Unter der Ausdrucksweise "Sanitärartikel" werden sämtliche in einem Sanitärraum zu platzierende Elemente verstanden. Insbesondere wird unter der Ausdrucksweise "Sanitärartikel" ein Urinal, eine Toilettenschüssel, ein Waschtisch, eine Betätigungsplatte, eine Sanitärarmatur, ein Montagegestell mit integriertem Sanitärartikelaktuator, ein Dusch-WC und/oder ein Dusch-WC-Aufsatz verstanden. Der Sanitärartikel kann aber auch ein Sensor sein, der in einem Sanitärraum angeordnet ist. Somit können beispielsweise Umgebungsdaten, wie Lufttemperatur, Luftfeuchtigkeit, Benutzerfrequenzen, etc. durch den Sensor erfasst und im Sanitärsystem entsprechend ausgewertet werden.

Vorzugsweise sind in einem Sanitärsystem eine Vielzahl von Sanitärartikeln angeordnet.

Die Sanitärartikelsteuerung kann je nach Funktion aktiv und/oder passiv mit dem Sanitärartikel zusammenarbeiten. Wenn der Sanitärartikel einen Aktuator, wie ein Ventil, umfasst, so kann die Sanitärartikelsteuerung den Aktuator aktiv ansteuern. Wenn der Sanitärartikel einen Sensor umfasst, so kann die Sanitärartikelsteuerung Sensordaten passiv empfangen oder aktiv abfragen.

Die Daten sind vorzugsweise Steuerungsdaten und/oder Zustandsdaten und/oder Messdaten und/oder Parameterdaten. Vorzugsweise ist das Gateway, das unten beschriebene Leitsystem und/oder der mobile Computer derart konfiguriert, dass die Daten weiterverarbeitet werden können. Beispielsweise können die Daten die Basis für eine kontrollierte Hygienespülung und/oder für zustandsorientierte Instandhaltungsarbeiten bilden.

Unter der Ausdrucksweise "mobiler Computer" wird ein mobiler Personal Computer, ein Notebook, ein Mobiltelefon, ein Tablet, ein Smartphone, eine Smartwatch oder ein ähnliches Gerät verstanden. Der Computer ist dabei derart konfiguriert, dass der Computer die beschriebenen Funktionen ausführen kann.

Unter der Ausdrucksweise "Prozessor" wird ein Verarbeitungselement verstanden, welches derart konfiguriert ist, dass die beschriebenen Schritte ausführbar sind.

Unter der Ausdrucksweise "Kommunikationsschnittstelle" wird eine Schnittstelle verstanden, über welche Daten zwischen den einzelnen Elementen ausgetauscht werden. Insbesondere zwischen dem Prozessor des Computers und dem Prozessor der Sanitärartikelsteuerung. Die Kommunikationsschnittstellen werden mit entsprechenden Protokollen betrieben.

Vorzugsweise ist die direkte Datenverbindung zwischen der computerseitigen Kommunikationsschnittstelle und der zweiten sanitärartikelseitigen Kommunikationsschnittstelle eine Datenverbindung zwischen dem mobilen Computer und ausschliesslich einem der genannten Sanitärartikel. Es handelt sich demnach um eine Punkt-zu-Punkt-Verbindung zwischen dem mobilen Computer und dem Sanitärartikel. Hier ergeht der Vorteil, dass der Installateur vor Ort direkt auf einen gewünschten Sanitärartikel mit dem mobilen Computer zugreifen kann, ohne dass die anderen Sanitärartikel beeinflusst werden.

Erfindungsgemäß steht bei der indirekten Datenverbindung zwischen der computerseitigen Kommunikationsschnittstelle und der ersten sanitärartikelseitigen Kommunikationsschnittstelle über das Gateway der mobile Computer mit mindestens einem oder mindestens zwei Sanitärartikeln über die Datenverbindung in Verbindung.

Weiter umfasst das Sanitärsystem weiterhin mindestens ein Leitsystem. Das mindestens eine Leitsystem ist mit einer ersten leitsystemseitigen Kommunikationsschnittstelle und einer zweiten leitsystemseitigen Kommunikationsschnittstelle ausgebildet. Das Leitsystem steht mit der ersten leitsystemseitigen Kommunikationsschnittstelle mit der zweiten gatewayseitigen Kommunikationsschnittstelle über eine Datenverbindung in Verbindung. Der mobile Computer steht mit der mindestens einen computerseitigen Kommunikationsschnittstelle mit der zweiten leitsystemseitigen Kommunikationsschnittstelle über eine Datenverbindung in Verbindung, so dass eine indirekte Datenverbindung über das Gateway zwischen dem mobilen Computer und der mindestens einen Sanitärartikelsteuerung bereitstellbar ist.

Weiter ist diese Datenverbindung über das Leitsystem alternativ zu den oben genannten Datenverbindungen. Mit anderen Worten: Der mobile Computer steht mit der mindestens einen computerseitigen Kommunikationsschnittstelle entweder
- mit der zweiten leitsystemseitigen Kommunikationsschnittstelle über eine Datenverbindung in Verbindung, so dass eine indirekte Datenverbindung über das Gateway zwischen dem mobilen Computer und der mindestens einen Sanitärartikelsteuerung bereitstellbar ist; oder
- mit der zweiten sanitärartikelseitigen Kommunikationsschnittstelle über eine Datenverbindung in Verbindung, so dass eine direkte Datenverbindung zwischen dem mobilen Computer und der mindestens einen Sanitärartikelsteuerung bereitstellbar ist, oder
- mit einer weiteren gatewayseitigen Kommunikationsschnittstelle über eine Datenverbindung in Verbindung, so dass eine indirekte Datenverbindung zwischen dem mobilen Computer und der mindestens einen Sanitärartikelsteuerung bereitstellbar ist.

Erfindungsgemäß steht bei der indirekten Datenverbindung zwischen der computerseitigen Kommunikationsschnittstelle und der ersten sanitärartikelseitigen Kommunikationsschnittstelle über das Leitsystem und das Gateway der mobile Computer mit mindestens einem oder mindestens zwei Sanitärartikeln über die Datenverbindung in Verbindung.

Vorzugsweise weist der mindestens eine Sanitärartikel mindestens einen Aktuator auf, welcher durch die Sanitärartikelsteuerung ansteuerbar ist, wobei die Sanitärartikelsteuerung derart konfiguriert ist, dass der mindestens eine Aktuator über Steuerungsbefehle, die über die Datenverbindung zur Sanitärartikelsteuerung übermittelt werden, ansteuerbar ist.

Die Ausbildung des Aktuators ist von der Ausbildung des Sanitärartikels abhängig. Der Aktuator ist beispielsweise ein Wasserventil einer Auslaufarmatur, ein Spülventil eines Urinals oder einer Toilette oder ein Wasserventil für ein Dusch-WC. Der Aktuator kann aber auch eine am Sanitärartikel angeordnete Lichtquelle oder die Heizung eines Toilettensitzes sein. Andere Aktuatoren sind ebenfalls denkbar.

Die Steuerbefehle für den Aktuator werden beispielsweise vom mobilen Computer oder vom Gateway bereitgestellt. Dabei kann ein Benutzer den Steuerbefehl händisch auslösen oder der Steuerbefehl wird anhand von Auslösekriterien ausgeblöst. Beispielsweise bei Erreichen eines bestimmten Zustandes oder periodisch nach Ablauf einer vorbestimmten Zeitdauer seit einer letzten Spülung.

Vorzugsweise weist der mindestens Sanitärartikel mindestens einen Sensor auf, welcher mit der Sanitärartikelsteuerung in Wirkverbindung steht, derart, dass Sensordaten vom mindestens einen Sensor an die Sanitärartikelsteuerung übermittelbar sind, wobei die Sanitärartikelsteuerung derart konfiguriert ist, dass die Sensordaten über die Datenverbindung von der Sanitärartikelsteuerung weg übermittelt werden.

Vorzugsweise werden die Sensordaten an den mobilen Computer übermittelt. Der mobile Computer ist dabei derart ausgebildet, dass die Sensordaten auf dem Bildschirm angezeigt werden können.

Die Ausbildung des Sensors ist von der Ausbildung des Sanitärartikels abhängig. Vorzugsweise dient der Sensor der Erfassung von Betriebsdaten. Beispielsweise ist der Sensor ein Temperatursensor zur Erfassung einer Wassertemperatur oder einer Raumtemperatur. Alternativerweise ist der Sensor ein Durchflusssensor zur Erfassung des Wasserdurchflusses.

Weiter kann der Sanitärartikel einen Erfassungssensor zur Erkennung eines Benutzers aufweisen. Der Erfassungssensor steht mit der Sanitärartikelsteuerung in funktionalen Kontakt, derart, dass nach Erfassung einer Person durch den Erfassungssensor ein Sensorsignal an die Sanitärartikelsteuerung übermittelbar ist, so dass die Sanitärartikelsteuerung ein Steuerbefehl für den Aktuator bereitstellt.

Vorzugsweise ist die Verbindung zwischen dem mobilen Computer und der zweiten leitsystemseitigen Kommunikationsschnittstelle eine kabellose oder eine kabelgebundene Verbindung. Vorzugsweise ist die Verbindung zwischen dem mobilen Computer und der zweiten sanitärelementseitigen Kommunikationsschnittstelle eine kabellose oder eine kabelgebundene Verbindung.

Vorzugsweise wird die Verbindung zwischen dem mobilen Computer und der zweiten leitsystemseitigen Kommunikationsschnittstelle oder zwischen der weiteren gatewayseitigen Kommunikationsschnittstelle gemäss einem anderen Verbindungsprotokoll hergestellt als die Verbindung zwischen dem mobilen Computer und der zweiten sanitärelementseitigen Kommunikationsschnittstelle.

Vorzugsweise erfolgt die Verbindung zwischen dem mobilen Computer und der zweiten leitsystemseitigen Kommunikationsschnittstelle bzw. der weitere gatewayseitigen Kommunikationsschnittstelle gemäss einem WLAN-Protkoll und die Verbindung zwischen dem mobilen Computer und der zweiten sanitärelementseitigen Kommunikationsschnittstelle ist vorzugsweise eine Bluetooth-Verbindung oder eine ZigBee-Verbdindung.

Vorzugsweise umfasst die indirekte Datenverbindung eine direkte Datenverbindung zwischen dem mobilen Computer und dem Gateway bzw. zwischen dem mobilen Computer und dem Leitsystem, wobei diese direkte Datenverbindung derart konfiguiert ist, dass Daten zwischen dem Gateway und dem mobilen Computer bzw. zwischen dem Leitsystem und dem mobilen Computer austauschbar sind. Vorzugsweise sind diese Daten Konfigurationsdaten, mit welchen das Leitsystem und/oder das Gateway konfigurierbar sind, und/oder Zustandsdaten. Über diese Verbindung lassen sich auch weitere Sanitärartikel dem Sanitärsystem hinzufügen.

Vorzugsweise ist das Leitsystem ein Cloudsystem, wobei das Cloudsystem einen Speicher aufweist, welcher derart konfiguriert ist, dass die von der mindestens einen Sanitärartikelsteuerung und/oder vom mobilen Computer erhaltenen Daten speicherbar sind. Vorzugsweise weist das Cloudsystem einen Prozessor auf, welcher derart konfiguriert ist, dass die von der mindestens einen Sanitärartikelsteuerung und/oder vom mobilen Computer erhaltenen Daten verarbeitbar sind.

Vorzugsweise ist die Datenverbindung zwischen dem Gateway und der Sanitärartikelsteuerung des mindestens einen Sanitärartikels eine kabellose oder eine kabelgebundene Verbindung. Eine kabelgebundene Verbindung zwischen dem Gateway und der Sanitärartikelsteuerung weist den Vorteil auf, dass mit dem Kabel der Sanitärartikel auch mit elektrischer Energie versorgt werden kann.

Vorzugsweise ist die Datenverbindung zwischen dem Gateway und dem Leitsystem eine kabellose oder eine kabelgebundene Verbindung.

Vorzugsweise weist das Gateway einen Prozessor auf, der zur Verarbeitung der vom Leitsystem oder von der Sanitärartikelsteuerung erhaltenen Daten konfiguriert ist. Vorzugsweise weist das Gateway einen Speicher auf, der zur Speicherung der vom Leitsystem oder von der Sanitärartikelsteuerung erhaltenen Daten konfiguriert ist.

Vorzugsweise weist das Leitsystem einen Prozessor auf, der zur Verarbeitung der vom Gateway oder von der Sanitärartikelsteuerung erhaltenen Daten konfiguriert ist. Vorzugsweise weist das Leitsystem einen Speicher auf, der zur Speicherung der vom Gateway oder von der Sanitärartikelsteuerung erhaltenen Daten konfiguriert ist

Vorzugsweise umfasst das Sanitärsystem einen weiteren Computer eines Gebäudeleitsystems, wobei der weitere Computer mindestens einen Prozessor, eine mit dem Prozessor wirkverbundene computerseitige Kommunikationsschnittstelle und einen mit dem Prozessor wirkverbundenen Bildschirm aufweist, und wobei das Gateway eine weitere Kommunikationsschnittstelle aufweist, wobei die beiden Kommunikationsschnittstellen über eine Datenverbindung miteinander in Verbindung stehen.

Ein Verfahren zum Betrieb eines Sanitärsystems nach einem der vorhergehenden Ansprüche, ist dadurch gekennzeichnet, dass
in einem ersten Schritt ein Pairingvorgang zwischen dem mobilen Computer und dem Gateway oder zwischen dem mobilen Computer und der zweiten sanitärartikelseitigen Kommunikationsschnittstelle (SK2) ausgeführt wird, derart, dass die besagte direkte Datenverbindung oder die besagte indirekte Datenverbindung hergestellt wird, und
dass in einem weiteren Schritt Daten zwischen der Sanitärartikelsteuerung und dem mobilen Computer ausgetauscht werden.

Bei Vorhandensein des Leitsystems wird im ersten Schritt ein Pairingvorgang zwischen dem mobilen Computer und der zweiten leitelementseitigen Kommunikationsschnittstelle des Leitsystems bereitgestellt.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:

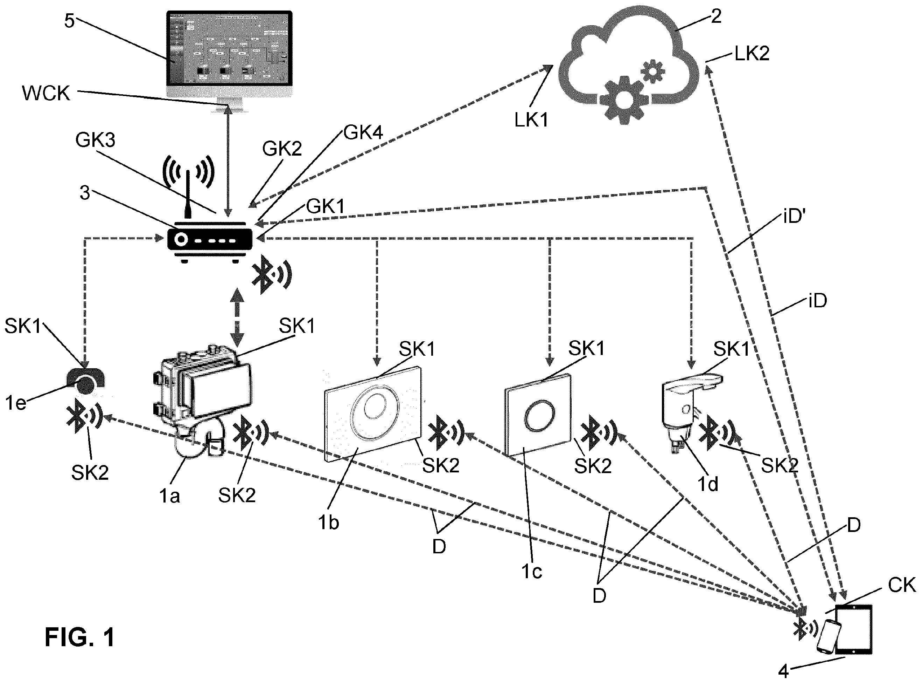

- Fig. 1: eine schematische Ansicht des Sanitärsystems nach einer Ausführungsform der vorliegenden Erfindung.

### BESCHREIBUNG BEVORZUGTER AUSFÜHRUNGSFORMEN

In der Figur 1 wird ein erfindungsgemässes Sanitärsystem gezeigt. Das Sanitärsystem 1 umfasst mindestens einen Sanitärartikel 1a, 1b, 1c, 1d, 1e, hier eine Mehrzahl von Sanitärartikeln, ein optionales Leitsystem 2, einen Gateway 3 und einen mobilen Computer 4.

Jeder der Sanitärartikel 1a, 1b, 1c, 1d, 1e steht über eine Datenverbindung mit dem Gateway 3 in Verbindung. Wenn das Leitsystem 2 vorhanden ist, steht das Gateway 3 mit einer Datenverbindung mit dem Leitsystem 2 in Verbindung. Der mobile Computer 4 ist über eine Datenverbindung entweder mit dem Gateway 3 oder mit einem der Sanitärartikel 1a, 1b, 1c, 1d, 1e in verbindbar. Bei Vorhandensein des Leitsystems 2 ist der mobile Computer 4 auch mit dem Leitsystem 2 über eine Datenverbindung verbindbar. Die Datenverbindung zwischen dem Sanitärartikel 1a, 1b, 1c, 1d, 1e und dem mobilen Computer 4 ist derart, dass Daten zwischen dem Sanitärartikel 1a, 1b, 1c, 1d, 1e und dem mobilen Computer 4 austauschbar sind.

Der Sanitärartikel 1a, 1b, 1c, 1d, 1e weist eine Sanitärartikelsteuerung auf. Die Sanitärartikelsteuerung ist zur Interaktion mit dem Sanitärartikel 1a, 1b, 1c, 1d, 1e konfiguriert. Die Sanitärartikelsteuerung weist mindestens einen Prozessor, eine mit dem Prozessor wirkverbundene erste sanitärartikelseitige Kommunikationsschnittstelle SK1 und eine mit dem Prozessor wirkverbundene zweite sanitärartikelseitige Kommunikationsschnittstelle SK2 auf.

Der Sanitärartikel 1a ist in der gezeigten Ausführungsform ein Hygienespülmodul. Mit der Sanitärartikelsteuerung kann ein Ventil angesteuert werden, um eine Hygienespülung auszulösen. Die zum Sanitärartikel 1a gesendeten Daten umfassen beispielsweise einen Steuerbefehl. Die vom Sanitärartikel 1a gesendeten Daten umfassen beispielsweise Informationen über die ausgeführte Spülung, wie beispielsweise den Zeitpunkt und/oder die Zeitdauer der Hygienespülung.

Die Sanitärartikel 1b und 1c sind als Betätigungsplatten zur Auslösung einer Spülung an einer Toilette oder einem Urinal ausgebildet. Der Sanitärartikel 1d ist als Auslaufarmatur ausgebildet. Der Sanitärartikel 1e ist als Sensor ausgebildet.

Das optionale Leitsystem 2 ist mit einer ersten leitsystemseitigen Kommunikationsschnittstelle LK1 und einer zweiten leitsystemseitigen Kommunikationsschnittstelle LK2 ausgebildet. In der gezeigten Ausführungsform ist das Leitsystem ein Cloudsystem. Das Cloudsystem weist vorzugsweise mindestens einen Speicher auf, welcher derart konfiguriert ist, dass die von der Sanitärartikelsteuerung und/oder vom mobilen Computer erhaltenen Daten speicherbar sind. Weiter kann das Cloudsystem auch einen Prozessor aufweisen, mit welchem die erhaltenen Daten verarbeitbar sind.

Das mindestens eine Gateway weist eine erste gatewayseitige Kommunikationsschnittstelle GK1 und eine zweite gatewayseitige Kommunikationsschnittstelle GK2 auf. Das Gateway kann als einfacher Router ausgebildet sein, mit welchem im Wesentlichen die Daten weitergeleitet werden. Das Gateway kann aber auch einen Prozessor aufweisen, der zur Verarbeitung der vom Leitsystem oder von der Sanitärartikelsteuerung erhaltenen Daten konfiguriert ist.

Das Leitsystem 2 steht mit der ersten leitsystemseitigen Kommunikationsschnittstelle LK1 mit der zweiten gatewayseitigen Kommunikationsschnittstelle GK2 über eine Datenverbindung in Verbindung.

Das Gateway 3 steht über die erste gatewayseitige Kommunikationsschnittstelle GK mit der ersten sanitärartikelseitigen Kommunikationsschnittstelle SK1 über eine Datenverbindung in Verbindung. Vorzugsweise ist jede Sanitärartikelsteuerung mit einer eigenen Datenverbindung mit dem Gateway verbunden. Andere Verbindungsarten sind auch denkbar.

In der Variante ohne Leitsystem gestalten sich die Verbindungen wie folgt: Der mobile Computer 4 ist mit der mindestens einen computerseitigen Kommunikationsschnittstelle CK entweder direkt mit einer der Sanitärartikelsteuerungen in Verbindung oder indirekt über das Gateway 3 mit den Sanitärartikelsteuerungen in Verbindung. Mit anderen Worten gesagt steht der mobile Computer 4 mit der mindestens einen computerseitigen Kommunikationsschnittstelle CK entweder
- mit der zweiten sanitärartikelseitigen Kommunikationsschnittstelle SK2 über eine Datenverbindung in Verbindung, so dass eine direkte Datenverbindung D zwischen dem mobilen Computer 4 und der mindestens einen Sanitärartikelsteuerung bereitstellbar ist, oder
mit einer weiteren gatewayseitigen Kommunikationsschnittstelle GK4 über eine Datenverbindung in Verbindung steht, so dass eine indirekte Datenverbindung iD' zwischen dem mobilen Computer 4 und der mindestens einen Sanitärartikelsteuerung bereitstellbar ist.

In der Variante mit Leitsystem gestalten sich die Verbindungen wie folgt: der mobile Computer 4 ist mit der mindestens einen computerseitigen Kommunikationsschnittstelle CK entweder direkt mit einer der Sanitärartikelsteuerungen in Verbindung oder indirekt über das Leitsystem 2 und das Gateway 3 mit den Sanitärartikelsteuerungen in Verbindung. Mit anderen Worten gesagt steht der mobile Computer 4 mit der mindestens einen computerseitigen Kommunikationsschnittstelle CK entweder
- mit der zweiten leitsystemseitigen Kommunikationsschnittstelle LK2 über eine Datenverbindung in Verbindung, so dass eine indirekte Datenverbindung iD über das Gateway 3 zwischen dem mobilen Computer und der mindestens einen Sanitärartikelsteuerung bereitstellbar ist, oder
- mit der zweiten sanitärartikelseitigen Kommunikationsschnittstelle SK2 über eine Datenverbindung in Verbindung, so dass eine direkte Datenverbindung D zwischen dem mobilen Computer 4 und der mindestens einen Sanitärartikelsteuerung bereitstellbar ist, oder
mit einer weiteren gatewayseitigen Kommunikationsschnittstelle GK4 über eine Datenverbindung in Verbindung steht, so dass eine indirekte Datenverbindung iD' zwischen dem mobilen Computer 4 und der mindestens einen Sanitärartikelsteuerung bereitstellbar ist.

Bei beiden Varianten sind Die direkte Datenverbindung D bzw. die indirekte(n) Datenverbindung(en) iD bzw. iD?zwischen dem mobilen Computer 4 und der Sanitärartikelsteuerung derart konfiguriert, dass Daten zwischen dem Prozessor des mobilen Computers 4 und dem Prozessor der mindestens einen Sanitärartikelsteuerung austauschbar sind.

Die direkte Datenverbindung D zwischen der computerseitigen Kommunikationsschnittstelle CK und der zweiten sanitärartikelseitigen Kommunikationsschnittstelle SK2 ist bei beiden Varianten vorzugsweise eine Punkt-zu-Punkt-Verbindung zwischen dem mobilen Computer 4 und dem Sanitärartikel1 a, 1b, 1c, 1d, 1e. Das heisst, es wird ausschliesslich mit einem der genannten Sanitärartikel eine Datenverbindung hergestellt. Datenverbindung zwischen dem mobilen Computer 4 und ausschliesslich einem der genannten Sanitärartikel 1a, 1b, 1c, 1d, 1e ist. Für den Sanitärfachmann, der sich mit Wartungsarbeiten vor Ort beschäftigt, ist dies vorteilhaft, da er sehr einfach den gewünschten Sanitärartikel auf dem mobilen Computer erkennen kann und nicht mit einer grösseren Auswahl konfrontiert ist.

Bei der indirekten Datenverbindung iD zwischen der computerseitigen Kommunikationsschnittstelle CK und der ersten sanitärartikelseitigen Kommunikationsschnittstelle SK1 über das Leitsystem 2 und das Gateway 3 steht der mobile Computer 4 mit mindestens einem oder mindestens zwei Sanitärartikeln 1a, 1b, 1c, 1d, 1e über die Datenverbindung in Verbindung steht. In analoger Weise kann der mobile Computer 4 mit dem Gateway 2 verbunden werden. Bei einer Fernwartung ist es vorteilhaft, wenn der Sanitärfachmann die gesamte Anlage auf dem mobilen Computer 4 eingeblendet sieht.

Vorzugsweise ist die Verbindnung zwischen dem mobilen Computer 4 und dem Gateway 3 oder dem Leitsystem 2 weiter dazu eingerichtet, um das Gateway 3 oder das Leitsystem 2 zu konfigurieren und/oder um weitere Sanitärartikel hinzuzufügen.

Typischerweise weist der mindestens eine Sanitärartikel 1a, 1b, 1c, 1d mindestens einen Aktuator auf. Der Aktuator ist im Fall der Sanitärartikel 1a und 1d ein Auslassventil, über welches eine Wassermenge abggebar ist. Im Fall der Sanitärartikel 1b, 1c ist der Aktuator beispielsweise eine Spülventil oder eine Anzeigeleuchte. Der Aktuator ist durch die Sanitärartikelsteuerung ansteuerbar. Die Sanitärartikelsteuerung ist derart konfiguriert, dass der mindestens eine Aktuator über Steuerungsbefehle, die über die Datenverbindung zur Sanitärartikelsteuerung übermittelt werden, ansteuerbar ist. So lassen sich Funktionen am Aktuator aktiv über den mobilen Computer 4 ausführen oder sie können nach vordefinierten Regeln, die im Leitsystem 2 oder im Gateway 3 abgelegt sind, ausgelöst werden. Beispielsweise sei hier eine Hygienespülung genannt. Bei einer Hygienespülung werden die Wasserleitungen periodisch oder bei Erreichen eines bestimmten Zustandes des Sanitärsystems gespült. Bei einer periodischen Spülung kommen die genannten Regeln zur Anwendung. Bei der Spülung bei Erreichen eines bestimmten Zustandes des Sanitärsystems können beispielsweise Messergebnisse von Sensoren ein auslösendes Ereignis darstellen.

Vorzugsweise umfasst der mindestens Sanitärartikel mindestens einen Sensor. In der gezeigten Ausführungsform umfasst der Sanitärartikel 1e einen Sensor. Beispielsweise einen Temperatursensor oder einen Sensor zur Erkennung von Benutzern. Die anderen Sanitärartikel 1a, 1b, 1c und 1d können ebenfalls entsprechende Sensoren aufweisen. Der Sensor steht mit der Sanitärartikelsteuerung derart in Wirkverbindung, dass Sensordaten vom mindestens Sensor an die Sanitärartikelsteuerung übermittelbar sind, wobei die Sanitärartikelsteuerung derart konfiguriert ist, dass die Sensordaten über die Datenverbindung von der Sanitärartikelsteuerung weg übermittelt werden. Die Sensordaten werden an das Gateway 3 und anschliessend an das Leitsystem 2 und können dann auf dem Bildschirm des mobilen Computer 4 angezeigt und abgelesen werden. Das Gateway 3, das Leitsystem 2 und/oder der mobile Computer 4 sind dazu konfiguriert, die Sensordaten zu verarbeiten. Bei der direkten Verbindung zwischen dem Computer 4 und der mindestens einen Sanitärartikelsteuerung 1a, 1b, 1c, 1d, 1e werden die Sensordaten direkt an den mobilen Computer 4 übermittelt und können dort angezeigt werden.

Die Verbindung zwischen dem mobilen Computer 4 und der zweiten leitsystemseitigen Kommunikationsschnittstelle LK2 ist eine kabellose oder eine kabelgebundene Verbindung. Die Verbindung zwischen dem mobilen Computer 4 und der zweiten sanitärelementseitigen Kommunikationsschnittstelle SK2 ist eine kabellose oder eine kabelgebundene Verbindung. Kabellose Verbindung werden bevorzugt.

Vorzugsweise wird die Verbindung zwischen dem mobilen Computer 4 und der zweiten leitsystemseitigen Kommunikationsschnittstelle LK2 oder zwischen der weiteren gatewayseitigen Kommunikationsschnittstelle GK4 gemäss einem anderen Verbindungsprotokoll hergestellt als die Verbindung zwischen dem mobilen Computer 4 und der zweiten sanitärelementseitigen Kommunikationsschnittstelle SK2. Bei der direkten Verbindung zwischen der Sanitärartikelsteuerung und dem mobilen Computer ist der Sanitärfachmann in räumlicher Nähe zum Sanitärartikel und daher kann ein Verbindungsprotokoll mit kleiner Reichweite eingesetzt werden. Bei der indirekten Verbindung ist der Sanitärfachmann meist in grösserer Entfernung zum Sanitärsystem und daher wird hier ein Verbindungsprotokoll mit grösserer Reichweite eingesetzt.

Vorzugsweise ist das Leitsystem ein Cloudsystem, wobei das Cloudsystem einen Speicher aufweist, welcher derart konfiguriert ist, dass die von der mindestens einen Sanitärartikelsteuerung und/oder vom mobilen Computer erhaltenen Daten speicherbar sind und/oder wobei das Cloudsystem einen Prozessor aufweist, welcher derart konfiguriert ist, dass die von der mindestens einen Sanitärartikelsteuerung und/oder vom mobilen Computer erhaltenen Daten verarbeitbar sind. Der mobile Computer kann dabei über ein Netzwerk oder über das Internet mit dem Leitsystem verbunden werden. Die Kommunikationsschnittstellen CK und LK2 sind entsprechend ausgebildet.

Die Verbindung zwischen dem Gateway 3 und der Sanitärartikelsteuerung des mindestens einen Sanitärartikels 1a, 1b, 1c, 1d, 1e ist eine kabellose oder eine kabelgebundene Verbindung. Bei der kabelgebundenen Verbindung ergeht der Vorteil, dass der Sanitärartikel bzw. die Sanitärartikelsteuerung auch gleich mit Energie versorgt werden können. Beispielsweise kann ein Kabel eingesetzt werden, welches sowohl für die Datenverbindung als auch für die Energieversorgung ausgebildet ist.

Die Verbindung zwischen dem Gateway 3 und dem Leitsystem 2 ist eine kabellose oder eine kabelgebundene Verbindung.

Das Gateway weist vorzugsweise einen Prozessor auf, der zur Verarbeitung der vom Leitsystem oder von der Sanitärartikelsteuerung erhaltenen Daten konfiguriert ist. Weiter weist das Gateway vorzugsweise einen Speicher zur Speicherung der vom Leitsystem oder von der Sanitärartikelsteuerung erhaltenen Daten auf. Das Leitsystem weist vorzugsweise einen Prozessor auf, der zur Verarbeitung der vom Gateway oder von der Sanitärartikelsteuerung erhaltenen Daten konfiguriert ist. Weiter weist das Leitsystem vorzugsweise einen Speicher zur Speicherung der vom Gateway oder von der Sanitärartikelsteuerung erhaltenen Daten auf.

Ferner umfasst das Sanitärsystem einen weiteren Computer 5 eines Gebäudeleitsystems, wobei der weitere Computer 5 mindestens einen Prozessor, eine mit dem Prozessor wirkverbundene computerseitige Kommunikationsschnittstelle WCK und einen mit dem Prozessor wirkverbundenen Bildschirm aufweist, und wobei das Gateway eine weitere Kommunikationsschnittstelle GK3 aufweist, wobei die beiden Kommunikationsschnittstellen WCK, GK3 über eine Datenverbindung miteinander in Verbindung stehen.

Vorzugsweise umfasst die indirekte Datenverbindung eine direkte Datenverbindung zwischen dem mobilen Computer 4 und dem Gateway 3 bzw. zwischen dem mobilen Computer 4 und dem Leitsystem 2, wobei diese direkte Datenverbindung derart konfiguiert ist, dass Daten zwischen dem Gateway 3 und dem mobilen Computer 4 bzw. zwischen dem Leitsystem 2 und dem mobilen Computer 4 austauschbar sind.

### BEZUGSZEICHENLISTE

- 1a-1e: Sanitärartikel
- 2: Leitsystem
- 3: Gateway
- 4: mobiler Computer
- 5: weiterer Computer
- SK1: erste sanitärartikelseitige Kommunikationsschnittstelle
- SK2: zweite sanitärartikelseitige Kommunikationsschnittstelle
- LK1: erste leitsystemseitige Kommunikationsschnittstelle
- LK2: zweite leitsystemseitige Kommunikationsschnittstelle
- GK1: erste gatewayseitige Kommunikationsschnittstelle
- GK2: zweite gatewayseitige Kommunikationsschnittstelle
- GK3: dritte gatewayseitige Kommunikationsschnittstelle
- GK 4: weitere gatewayseitige Kommunikationsschnittstelle
- CK: computerseitigen Kommunikationsschnittstelle
- WCK: computerseitige Kommunikationsschnittstelle des weiteren Computers
- iD: indirekte Datenverbindung
- iD': indirekte Datenverbindung
- D: direkte Datenverbindung

## Patentansprüche

1. Sanitärsystem umfassend
mindestens einen Sanitärartikel (1a, 1b, 1c, 1d, 1e) mit jeweils einer Sanitärartikelsteuerung, die zur Interaktion mit dem Sanitärartikel (1a, 1b, 1c, 1d, 1e) konfiguriert ist, wobei die Sanitärartikelsteuerung mindestens einen Prozessor, eine mit dem Prozessor wirkverbundene erste sanitärartikelseitige Kommunikationsschnittstelle (SK1) und eine mit dem Prozessor wirkverbundene zweite sanitärartikelseitige Kommunikationsschnittstelle (SK2) aufweist, **dadurch gekennzeichnet, dass** das Sanitärsystem weiterhin
mindestens ein Gateway (3), wobei das Gateway eine erste gatewayseitige Kommunikationsschnittstelle (GK1) und eine zweite gatewayseitige Kommunikationsschnittstelle (GK2) aufweist, und
einen mobiler Computer (4) mit mindestens einen Prozessor, mindestens eine mit diesem Prozessor wirkverbundene computerseitige Kommunikationsschnittstelle (CK) und einen mit dem Prozessor wirkverbundenen Bildschirm, umfasst,
wobei das mindestens eine Gateway (3) über die erste gatewayseitige Kommunikationsschnittstelle (GK1) mit der ersten sanitärartikelseitigen Kommunikationsschnittstelle (SK1) über eine Datenverbindung in Verbindung steht,
wobei der mobile Computer (4) mit der mindestens einen computerseitigen Kommunikationsschnittstelle (CK) entweder
- mit der zweiten sanitärartikelseitigen Kommunikationsschnittstelle (SK2) über eine Datenverbindung in Verbindung steht, so dass eine direkte Datenverbindung (D) zwischen dem mobilen Computer (4) und der mindestens einen Sanitärartikelsteuerung bereitstellbar ist, oder
- mit einer weiteren gatewayseitigen Kommunikationsschnittstelle (GK4) über eine Datenverbindung in Verbindung steht, so dass eine indirekte Datenverbindung (iD') zwischen dem mobilen Computer (4) und der mindestens einen Sanitärartikelsteuerung bereitstellbar ist,
wobei die direkte Datenverbindung (D) bzw. die indirekte Datenverbindung (iD') zwischen dem mobilen Computer (4) und der Sanitärartikelsteuerung derart konfiguriert sind, dass Daten zwischen dem Prozessor des mobilen Computers (4) und dem Prozessor der mindestens einen Sanitärartikelsteuerung austauschbar sind,
dass das Sanitärsystem weiterhin mindestens ein Leitsystem (2) mit einer ersten leitsystemseitigen Kommunikationsschnittstelle (LK1) und einer zweiten leitsystemseitigen Kommunikationsschnittstelle (LK2) umfasst,
wobei das Leitsystem (2) mit der ersten leitsystemseitigen Kommunikationsschnittstelle (LK1) mit der zweiten gatewayseitigen Kommunikationsschnittstelle (GK2) über eine Datenverbindung in Verbindung steht,
wobei der mobile Computer (4) mit der mindestens einen computerseitigen Kommunikationsschnittstelle (CK) in alternativer Weise zu den genannten Datenverbindungen mit der zweiten leitsystemseitigen Kommunikationsschnittstelle (LK2) über eine Datenverbindung in Verbindung steht, so dass eine indirekte Datenverbindung (iD) über das Gateway (3) zwischen dem mobilen Computer und der mindestens einen Sanitärartikelsteuerung bereitstellbar ist und
dass bei der indirekten Datenverbindung (iD) zwischen der computerseitigen Kommunikationsschnittstelle (CK) und der ersten sanitärartikelseitigen Kommunikationsschnittstelle (SK1) über das Leitsystem (2) und das Gateway (3) der mobile Computer (4) mit mindestens einem oder mindestens zwei Sanitärartikeln (1a, 1b, 1c, 1d, 1e) über die Datenverbindung in Verbindung steht.

2. Sanitärsystem nach Anspruch 1, **dadurch gekennzeichnet, dass** die direkte Datenverbindung (D) zwischen der computerseitigen Kommunikationsschnittstelle (CK) und der zweiten sanitärartikelseitigen Kommunikationsschnittstelle (SK2) eine Datenverbindung zwischen dem mobilen Computer (4) und ausschliesslich einem der genannten Sanitärartikel (1a, 1b, 1c, 1d, 1e) ist.

3. Sanitärsystem nach Anspruch 1 oder 2, **dadurch gekennzeichnet, dass** bei der indirekten Datenverbindung (iD') zwischen der computerseitigen Kommunikationsschnittstelle (CK) und der ersten sanitärartikelseitigen Kommunikationsschnittstelle (SK1) über das Gateway (3) der mobile Computer (4) mit mindestens einem oder mindestens zwei Sanitärartikeln (1a, 1b, 1c, 1d, 1e) über die Datenverbindung in Verbindung steht.

4. Sanitärsystem nach einem der vorhergehenden Ansprüche, **dadurch gekennzeichnet, dass** der mindestens eine Sanitärartikel (1a, 1b, 1c, 1d, 1e) mindestens einen Aktuator aufweist, welcher durch die Sanitärartikelsteuerung ansteuerbar ist, wobei die Sanitärartikelsteuerung derart konfiguriert ist, dass der mindestens eine Aktuator über Steuerungsbefehle, die über die Datenverbindung zur Sanitärartikelsteuerung übermittelt werden, ansteuerbar ist.

5. Sanitärsystem nach einem der vorhergehenden Ansprüche, **dadurch gekennzeichnet, dass** der mindestens eine Sanitärartikel (1a, 1b, 1c, 1d, 1e) mindestens einen Sensor aufweist, welcher mit der Sanitärartikelsteuerung in Wirkverbindung steht, derart, dass Sensordaten vom mindestens einen Sensor an die Sanitärartikelsteuerung übermittelbar sind, wobei die Sanitärartikelsteuerung derart konfiguriert ist, dass die Sensordaten über die Datenverbindung von der Sanitärartikelsteuerung weg übermittelt werden.

6. Sanitärsystem nach einem der vorhergehenden Ansprüche, **dadurch gekennzeichnet, dass** die Verbindung zwischen dem mobilen Computer (4) und der weiteren gatewayseitigen Kommunikationsschnittstelle (GK4) gemäss einem anderen Verbindungsprotokoll hergestellt wird als die Verbindung zwischen dem mobilen Computer (4) und der zweiten sanitärelementseitigen Kommunikationsschnittstelle (SK2).

7. Sanitärsystem nach einem der vorhergehenden Ansprüche, **dadurch gekennzeichnet,**
**dass** die Verbindung zwischen dem mobilen Computer (4) und der zweiten sanitärelementseitigen Kommunikationsschnittstelle (SK2) eine kabellose oder eine kabelgebundene Verbindung ist; und/oder
**dass** die Datenverbindung zwischen dem Gateway (3) und der Sanitärartikelsteuerung des mindestens einen Sanitärartikels (1a, 1b, 1c, 1d, 1e) eine kabellose oder eine kabelgebundene Verbindung ist; und/oder
**dass** das Gateway (3) einen Prozessor aufweist, der zur Verarbeitung der erhaltenen Daten konfiguriert ist; und/oder
**dass** das Gateway (3) einen Speicher aufweist, der zur Speicherung der erhaltenen Daten konfiguriert ist.

8. Sanitärsystem nach einem der vorhergehenden Ansprüche, **dadurch gekennzeichnet,**
**dass** die Verbindung zwischen dem mobilen Computer (4) und der zweiten leitsystemseitigen Kommunikationsschnittstelle (LK2) eine kabellose oder eine kabelgebundene Verbindung ist; und/oder
**dass** die Datenverbindung zwischen dem Gateway (3) und dem Leitsystem (2) eine kabellose oder eine kabelgebundene Verbindung ist; und/oder
**dass** das Leitsystem (2) einen Prozessor aufweist, der zur Verarbeitung der vom Gateway (3) oder von der Sanitärartikelsteuerung (1a, 1b, 1c, 1d, 1e) erhaltenen Daten konfiguriert ist, und/oder
**dass** das Leitsystem (2) einen Speicher aufweist, der zur Speicherung der vom Gateway (3) oder von der Sanitärartikelsteuerung (1a, 1b, 1c, 1d, 1e) erhaltenen Daten konfiguriert ist.

9. Sanitärsystem nach einem der vorhergehenden Ansprüche, **dadurch gekennzeichnet, dass** die Verbindung zwischen dem mobilen Computer (4) und der zweiten leitsystemseitigen Kommunikationsschnittstelle (LK2) gemäss einem anderen Verbindungsprotokoll hergestellt wird als die Verbindung zwischen dem mobilen Computer (4) und der zweiten sanitärelementseitigen Kommunikationsschnittstelle (SK2).

10. Sanitärsystem nach einem der vorhergehenden Ansprüche, **dadurch gekennzeichnet, dass** die indirekte Datenverbindung eine direkte Datenverbindung zwischen dem mobilen Computer (4) und dem Gateway (3) bzw. zwischen dem mobilen Computer (4) und dem Leitsystem (2) umfasst, wobei diese direkte Datenverbindung derart konfiguiert ist, dass Daten zwischen dem Gateway (3) und dem mobilen Computer (4) bzw. zwischen dem Leitsystem (2) und dem mobilen Computer (4) austauschbar sind.

11. Sanitärsystem nach einem der vorhergehenden Ansprüche, **dadurch gekennzeichnet, dass** das Leitsystem (2) ein Cloudsystem ist, wobei das Cloudsystem einen Speicher aufweist, welcher derart konfiguriert ist, dass die von der mindestens einen Sanitärartikelsteuerung (1a, 1b, 1c, 1d, 1e) und/oder vom mobilen Computer (4) erhaltenen Daten speicherbar sind und/oder wobei das Cloudsystem einen Prozessor aufweist, welcher derart konfiguriert ist, dass die von der mindestens einen Sanitärartikelsteuerung (1a, 1b, 1c, 1d, 1e) und/oder vom mobilen Computer (4) erhaltenen Daten verarbeitbar sind.

12. Sanitärsystem nach einem der vorhergehenden Ansprüchen, **dadurch gekennzeichnet, dass** das Sanitärsystem einen weiteren Computer (5) eines Gebäudeleitsystems umfasst, wobei der weitere Computer (5) mindestens einen Prozessor, eine mit dem Prozessor wirkverbundene computerseitige Kommunikationsschnittstelle (WCK) und einen mit dem Prozessor wirkverbundenen Bildschirm aufweist, und wobei das Gateway eine weitere Kommunikationsschnittstelle (GK3) aufweist, wobei die beiden Kommunikationsschnittstellen (WCK, GK3) über eine Datenverbindung miteinander in Verbindung stehen.

13. Verfahren zum Betrieb eines Sanitärsystems nach einem der vorhergehenden Ansprüche, **dadurch gekennzeichnet, dass**
in einem ersten Schritt ein Pairingvorgang zwischen dem mobilen Computer (4) und der weiteren gatewayseitigen Kommunikationsschnittstelle des Gateways (3) oder zwischen dem mobilen Computer (4) und der zweiten sanitärartikelseitigen Kommunikationsschnittstelle (SK2) ausgeführt wird, derart, dass die besagte direkte Datenverbindung oder die besagte indirekte Datenverbindung hergestellt wird, und
dass in einem weiteren Schritt Daten zwischen der Sanitärartikelsteuerung und dem mobilen Computer ausgetauscht werden.

14. Computerprogrammprodukt umfassend: ein computerlesbares Medium mit darin enthaltenen Computerprogrammcodemitteln zur Steuerung eines oder mehrerer Prozessoren eines Computers, welcher Computer mindestens einen Prozessor, eine mit dem Prozessor wirkverbundene computerseitige Kommunikationsschnittstelle und einen mit dem Prozessor wirkverbundenen Bildschirm umfasst,
wobei das Computerprogrammcodemittel zum Betrieb eines Sanitärsystem nach einem der Ansprüche 1 bis 12 ausgebildet sind.

## Claims

1. Sanitary system comprising
at least one sanitary article (1a, 1b, 1c, 1d, 1e), each with a sanitary article controller configured to interact with the sanitary article (1a, 1b, 1c, 1d, 1e), wherein the sanitary article controller has at least one processor, a first sanitary article-side communication interface (SK1) operatively connected to the processor, and a second sanitary article-side communication interface (SK2) operatively connected to the processor, **characterised in that** the sanitary system further comprises
at least one gateway (3), wherein the gateway comprises a first gateway-side communication interface (GK1) and a second gateway-side communication interface (GK2), and
a mobile computer (4) with at least one processor, at least one computer-side communication interface (CK) operatively connected to this processor, and a screen operatively connected to the processor,
wherein the at least one gateway (3) is connected via the first gateway-side communication interface (GK1) to the first sanitary article-side communication interface (SK1) via a data connection,
wherein the mobile computer (4) is connected via the at least one computer-side communication interface (CK) either
- with the second sanitary article-side communication interface (SK2) via a data connection, so that a direct data connection (D) between the mobile computer (4) and the at least one sanitary article control can be provided, or
- is connected to a further gateway-side communication interface (GK4) via a data connection, so that an indirect data connection (iD') can be provided between the mobile computer (4) and the at least one sanitary article control,
wherein the direct data connection (D) and the indirect data connection (iD') between the mobile computer (4) and the sanitary article control are configured such that data can be exchanged between the processor of the mobile computer (4) and the processor of the at least one sanitary article control,
**in that** the sanitary system further comprising at least one control system (2) with a first control system-side communication interface (LK1) and a second control system-side communication interface (LK2),
wherein the control system (2) is connected via a data connection to the second gateway-side communication interface (GK2) with the first control system-side communication interface (LK1),
wherein the mobile computer (4) with the at least one computer-side communication interface (CK) is connected to the second control system-side communication interface (LK2) via a data connection as an alternative to the aforementioned data connections, so that an indirect data connection (iD) can be provided via the gateway (3) between the mobile computer and the at least one sanitary article control, and
**in that** in the indirect data connection (iD) between the computer-side communication interface (CK) and the first sanitary article-side communication interface (SK1) via the control system (2) and the gateway (3), the mobile computer (4) is connected to at least one or at least two sanitary articles (1a, 1b, 1c, 1d, 1e) via the data connection.

2. Sanitary system according to claim 1, **characterised in that** the direct data connection (D) between the computer-side communication interface (CK) and the second sanitary article-side communication interface (SK2) is a data connection between the mobile computer (4) and exclusively one of the aforementioned sanitary articles (1a, 1b, 1c, 1d, 1e).

3. Sanitary system according to claim 1 or 2, **characterised in that**, in the indirect data connection (iD') between the computer-side communication interface (CK) and the first sanitary article-side communication interface (SK1) via the gateway (3), the mobile computer (4) is connected to at least one or at least two sanitary articles (1a, 1b, 1c, 1d, 1e) via the data connection.

4. Sanitary system according to one of the preceding claims, **characterised in that** the at least one sanitary article (1a, 1b, 1c, 1d, 1e) has at least one actuator which can be controlled by the sanitary article control, wherein the sanitary article control is configured such that the at least one actuator can be controlled via control commands which are transmitted to the sanitary article control via the data connection .

5. Sanitary system according to one of the preceding claims, **characterised in that** the at least one sanitary article (1a, 1b, 1c, 1d, 1e) has at least one sensor which is operatively connected to the sanitary article control system in such a way that sensor data from the at least one sensor can be transmitted to the sanitary article control system, wherein the sanitary article control system is configured in such a way that the sensor data is transmitted away from the sanitary article control system via the data connection.

6. Sanitary system according to one of the preceding claims, **characterised in that** the connection between the mobile computer (4) and the further gateway-side communication interface (GK4) is established according to a different connection protocol than the connection between the mobile computer (4) and the second sanitary element-side communication interface (SK2).

7. Sanitary system according to one of the preceding claims, **characterised**
**in that** the connection between the mobile computer (4) and the second sanitary element-side communication interface (SK2) is a wireless or a wired connection; and/or
**in that** the data connection between the gateway (3) and the sanitary article control of the at least one sanitary article (1a, 1b, 1c, 1d, 1e) is a wireless or wired connection; and/or
**in that** the gateway (3) has a processor that is configured to process the received data; and/or
**in that** the gateway (3) has a memory configured to store the received data.

8. Sanitary system according to one of the preceding claims, **characterised**
**in that** the connection between the mobile computer (4) and the second control system-side communication interface (LK2) is a wireless or wired connection; and/or
**in that** the data connection between the gateway (3) and the control system (2) is a wireless or wired connection; and/or
**in that** the control system (2) has a processor that is configured to process the data received from the gateway (3) or from the sanitary article control (1a, 1b, 1c, 1d, 1e), and/or
**in that** the control system (2) has a memory configured to store the data received from the gateway (3) or from the sanitary appliance control (1a, 1b, 1c, 1d, 1e).

9. Sanitary system according to one of the preceding claims, **characterised in that** the connection between the mobile computer (4) and the second control system-side communication interface (LK2) is established according to a different connection protocol than the connection between the mobile computer (4) and the second sanitary element-side communication interface (SK2).

10. Sanitary system according to one of the preceding claims, **characterised in that** the indirect data connection comprises a direct data connection between the mobile computer (4) and the gateway (3) or between the mobile computer (4) and the control system (2), wherein this direct data connection is configured such that data can be exchanged between the gateway (3) and the mobile computer (4) and between the control system (2) and the mobile computer (4) can be exchanged.

11. Sanitary system according to one of the preceding claims, **characterised in that** the control system (2) is a cloud system, wherein the cloud system has a memory which is configured such that the data received from the at least one sanitary article control (1a, 1b, 1c, 1d, 1e) and/or the mobile computer (4) can be stored and/or wherein the cloud system has a processor which is configured such that the data received from the at least one sanitary article control (1a, 1b, 1c, 1d, 1e) and/or the mobile computer (4) can be processed.

12. Sanitary system according to one of the preceding claims, **characterised in that** the sanitary system comprises a further computer (5) of a building management system, wherein the further computer (5) has at least one processor, a computer-side communication interface (WCK) operatively connected to the processor, and a screen operatively connected to the processor, and wherein the gateway has a further communication interface (GK3), wherein the two communication interfaces (WCK, GK3) are connected to each other via a data connection.

13. Method for operating a sanitary system according to one of the preceding claims, **characterised in that**
in a first step, a pairing process is carried out between the mobile computer (4) and the other gateway-side communication interface of the gateway (3) or between the mobile computer (4) and the second sanitary article-side communication interface (SK2) in such a way that the said direct data connection or the said indirect data connection is established, and
in a further step, data is exchanged between the sanitary article control system and the mobile computer.

14. Computer program product comprising: a computer-readable medium containing computer program code means for controlling one or more processors of a computer, which computer comprises at least one processor, a computer-side communication interface operatively connected to the processor, and a screen operatively connected to the processor,
wherein the computer program code means are configured to operate a sanitary system according to one of claims 1 to 12.

## Revendications

1. Système sanitaire comprenant
au moins un article sanitaire (1a, 1b, 1c, 1d, 1e) avec respectivement une commande d'article sanitaire qui est configurée pour interagir avec l'article sanitaire (1a, 1b, 1c, 1d, 1e), la commande d'article sanitaire comportant au moins un processeur, une première interface de communication côté article sanitaire (SK1) reliée de manière fonctionnelle au processeur et une deuxième interface de communication côté article sanitaire (SK2) reliée de manière fonctionnelle au processeur, **caractérisé en ce que** le système sanitaire comprend en outre
au moins une passerelle (3), la passerelle comportant une première interface de communication côté passerelle (GK1) et une deuxième interface de communication côté passerelle (GK2), et
un ordinateur mobile (4) avec au moins un processeur, au moins une interface de communication côté ordinateur (CK) reliée de manière opérationnelle à ce processeur et un écran relié de manière opérationnelle au processeur,
l'au moins une passerelle (3) étant en communication avec la première interface de communication côté article sanitaire (SK1) via la première interface de communication côté passerelle (GK1) par l'intermédiaire d'une connexion de données,
l'ordinateur mobile (4) étant connecté, via la première interface de communication côté ordinateur (CK), soit
- à la deuxième interface de communication côté article sanitaire (SK2) via une connexion de données, de sorte qu'une connexion de données directe (D) entre l'ordinateur mobile (4) et l'au moins une commande d'article sanitaire puisse être fournie, ou
- à une autre interface de communication côté passerelle (GK4) via une connexion de données, de sorte qu'une connexion de données indirecte (iD') peut être établie entre l'ordinateur mobile (4) et l'au moins une commande d'article sanitaire,
la connexion directe de données (D) ou la connexion indirecte de données (iD') entre l'ordinateur mobile (4) et la commande d'article sanitaire étant configurée de telle sorte que les données puissent être échangées entre le processeur de l'ordinateur mobile (4) et le processeur de l'au moins une commande d'article sanitaire,
le système sanitaire comprenant en outre au moins un système de contrôle (2) avec une première interface de communication côté système de contrôle (LK1) et une deuxième interface de communication côté système de contrôle (LK2),
le système de contrôle (2) étant connecté avec la première interface de communication côté système de contrôle (LK1) avec la deuxième interface de communication côté passerelle (GK2) par l'intermédiaire une connexion de données,
l'ordinateur mobile (4) étant connecté avec l'au moins une interface de communication côté ordinateur (CK) de manière alternative aux liaisons de données mentionnées à la deuxième interface de communication côté système de contrôle (LK2) par l'intermédiaire d'une liaison de données, de sorte qu'une liaison de données indirecte (iD) puisse être établie via la passerelle (3) entre l'ordinateur mobile et l'au moins une commande d'article sanitaire, et
que dans le cas de la connexion de données indirecte (iD) entre l'interface de communication côté ordinateur (CK) et la première interface de communication côté article sanitaire (SK1) par l'intermédiaire du système de contrôle (2) et la passerelle (3), l'ordinateur mobile (4) est connecté à au moins un ou au moins deux articles sanitaires (1a, 1b, 1c, 1d, 1e) par l'intermédiaire de la connexion de données.

2. Système sanitaire selon la revendication 1, **caractérisé en ce que** la connexion de données directe (D) entre l'interface de communication côté ordinateur (CK) et la deuxième interface de communication côté article sanitaire (SK2) est une connexion de données entre l'ordinateur mobile (4) et exclusivement l'un des articles sanitaires mentionnés (1a, 1b, 1c, 1d, 1e).

3. Système sanitaire selon la revendication 1 ou 2, **caractérisé en ce que**, dans le cas de la connexion de données indirecte (iD') entre l'interface de communication côté ordinateur (CK) et la première interface de communication côté article sanitaire (SK1) par l'intermédiaire de la passerelle (3), l'ordinateur mobile (4) est connecté à au moins un ou au moins deux articles sanitaires (1a, 1b, 1c, 1d, 1e) par l'intermédiaire de la connexion de données.

4. Système sanitaire selon l'une quelconque des revendications précédentes, **caractérisé en ce que** l'au moins un article sanitaire (1a, 1b, 1c, 1d, 1e) comporte au moins un actionneur qui peut être commandé par la commande d'article sanitaire, la commande d'article sanitaire étant configurée de telle sorte que l'au moins un actionneur puisse être commandé par des instructions de commande qui sont transmises à la commande d'article sanitaire par l'intermédiaire de la connexion de données.

5. Système sanitaire selon l'une quelconque des revendications précédentes, **caractérisé en ce que** l'au moins un article sanitaire (1a, 1b, 1c, 1d, 1e) comporte au moins un capteur qui est en liaison active avec la commande d'article sanitaire, de telle sorte que les données du capteur puissent être transmises par l'au moins un capteur à la commande d'article sanitaire, la commande d'article sanitaire étant configurée de telle sorte que les données du capteur soient transmises par la connexion de données à partir de la commande d'article sanitaire.

6. Système sanitaire selon l'une quelconque des revendications précédentes, **caractérisé en ce que** la connexion entre l'ordinateur mobile (4) et l'autre interface de communication côté passerelle (GK4) est établie selon un protocole de connexion différent de celui utilisé pour la connexion entre l'ordinateur mobile (4) et la deuxième interface de communication côté élément sanitaire (SK2).

7. Système sanitaire selon l'une quelconque des revendications précédentes, **caractérisé en ce**
**que** la connexion entre l'ordinateur mobile (4) et la deuxième interface de communication côté élément sanitaire (SK2) est une connexion sans fil ou par câble ; et/ou
**que** la connexion de données entre la passerelle (3) et la commande d'au moins un article sanitaire (1a, 1b, 1c, 1d, 1e) est une connexion sans fil ou par câble ; et/ou
**que** la passerelle (3) comprend un processeur configuré pour traiter les données reçues ; et/ou
**que** la passerelle (3) comprend une mémoire configurée pour stocker les données reçues.

8. Système sanitaire selon l'une quelconque des revendications précédentes, **caractérisé en ce**
**que** la connexion entre l'ordinateur mobile (4) et la deuxième interface de communication côté système de contrôle (LK2) est une connexion sans fil ou par câble; et/ou
**que** la connexion de données entre la passerelle (3) et le système de contrôle (2) est une connexion sans fil ou par câble ; et/ou
**que** le système de contrôle (2) comprend un processeur qui est configuré pour traiter les données reçues de la passerelle (3) ou de la commande d'article sanitaire (1a, 1b, 1c, 1d, 1e), et/ou
**que** le système de contrôle (2) comprend une mémoire configurée pour stocker les données reçues de la passerelle (3) ou de la commande d'article sanitaire (1a, 1b, 1c, 1d, 1e).

9. Système sanitaire selon l'une quelconque des revendications précédentes, **caractérisé en ce que** la connexion entre l'ordinateur mobile (4) et la deuxième interface de communication côté système de contrôle (LK2) est établie selon un protocole de connexion différent de celui utilisé pour la connexion entre l'ordinateur mobile (4) et la deuxième interface de communication côté élément sanitaire (SK2).

10. Système sanitaire selon l'une quelconque des revendications précédentes, **caractérisé en ce que** la connexion de données indirecte comprend une connexion de données directe entre l'ordinateur mobile (4) et la passerelle (3) ou entre l'ordinateur mobile (4) et le système de contrôle (2), cette connexion de données directe étant configurée de telle sorte que les données puissent être échangées entre la passerelle (3) et l'ordinateur mobile (4) ou entre le système de contrôle (2) et l'ordinateur mobile (4).

11. Système sanitaire selon l'une quelconque des revendications précédentes, **caractérisé en ce que** le système de contrôle (2) est un système cloud, le système cloud comportant une mémoire qui est configurée de telle sorte que les données reçues de l'au moins une commande d'article sanitaire (1a, 1b, 1c, 1d, 1e) et/ou de l'ordinateur mobile (4) puissent être stockées et/ou le système cloud comprenant un processeur qui est configuré de telle sorte que les données reçues de l'au moins une commande d'article sanitaire (1a, 1b, 1c, 1d, 1e) et/ou de l'ordinateur mobile (4) puissent être traitées.

12. Système sanitaire selon l'une quelconque des revendications précédentes, **caractérisé en ce que** le système sanitaire comprend un autre ordinateur (5) d'un système de gestion de bâtiment, l'autre ordinateur (5) comportant au moins un processeur, une interface de communication côté ordinateur (WCK) reliée de manière opérationnelle au processeur et un écran relié de manière opérationnelle au processeur, et la passerelle comportant une autre interface de communication (GK3), les deux interfaces de communication (WCK, GK3) étant connectées entre elles par une connexion de données.

13. Procédé pour faire fonctionner un système sanitaire selon l'une des revendications précédentes, **caractérisé en ce que**
dans une première étape, un processus d'appairage est exécuté entre l'ordinateur mobile (4) et l'autre interface de communication côté passerelle de la passerelle (3) ou entre l'ordinateur mobile (4) et la deuxième interface de communication côté article sanitaire (SK2), de telle sorte que ladite connexion de données directe ou ladite connexion de données indirecte soit établie, et
qu'au cours d'une autre étape, des données sont échangées entre la commande d'article sanitaire et l'ordinateur mobile.

14. Produit logiciel comprenant : un support lisible par ordinateur contenant des moyens de code logiciel pour commander un ou plusieurs processeurs d'un ordinateur, lequel ordinateur comprenant au moins un processeur, une interface de communication côté ordinateur connectée reliée de manière opérationnelle au processeur et un écran relié de manière opérationnelle au processeur,
les moyens de code logiciel étant conçus pour faire fonctionner un système sanitaire selon l'une des revendications 1 à 12.
